# FASCICULE DE BREVET EUROPEEN

(11) **EP 3 974 686 B1**
(45) Date de publication et mention de la délivrance du brevet: **17.04.2024**
(21) Numéro de dépôt: 21306269.8
(22) Date de dépôt: 15.09.2021
(51) Int. Cl.: F16J 15/08, F16K 1/22, F16K 1/226, F16K 1/228

(54) **SYSTÈME D'ÉTANCHÉITÉ MÉTALLIQUE POUR VANNE PAPILLON À TRIPLE EXCENTRATION**
METALLISCHES DICHTUNGSSYSTEM FÜR DREIFACH EXZENTRISCHE ABSPERRKLAPPE
METAL SEALING SYSTEM FOR TRIPLE ECCENTRIC BUTTERFLY VALVE

(30) Priorité: 24.09.2020 FR 2009719
(43) Date de publication de la demande: 30.03.2022
(73) Titulaire: Commissariat à l'énergie atomique et aux énergies alternatives, 75015 Paris (FR); Technetics Group France SAS, 42000 Saint-Etienne (FR)
(72) Inventeur: GUIMET, Laurent, 42230 ROCHE-LA-MOLIERE (FR); LEFRANCOIS, Michel, 42000 SAINT ETIENNE (FR); BOYER, Etienne, 42270 SAINT-PRIEST-EN-JAREZ (FR); TESSIER, Marin, 26130 SAINT-PAUL-TROIS-CHATEAUX (FR); DARQUE, Jean-Jacques, 31140 LAUNAGUET (FR); THEVENON, Bertrand, 42390 VILLARS (FR)
(74) Mandataire: Brevalex

(56) Documents cités:
- DE-A1-102012 103 726
- US-A1- 2007 215 834
- US-A1- 2013 087 734
- US-A1- 2018 266 567

## Description

### DOMAINE TECHNIQUE

La présente invention se rapporte au domaine des systèmes d'étanchéité pour vanne papillon à triple excentration, et s'intéresse plus spécifiquement au système d'étanchéité principal de la vanne assurant l'étanchéité « en ligne », à savoir l'étanchéité sur le pourtour du papillon lors de la fermeture de la vanne.

### ÉTAT DE LA TECHNIQUE ANTÉRIEURE

Le brevet américain US 9,273,789 B2 divulgue un agencement typique de vanne papillon à triple excentration. La première excentration consiste en un décalage de l'arbre par rapport à la surface du papillon, en suivant l'axe de la conduite. Ce même arbre est également décalé latéralement par rapport à l'axe de la conduite pour obtenir la deuxième excentration. Enfin, la surface d'appui du joint est conique, avec un certain angle d'inclinaison qui forme la troisième excentration.

Cet agencement est bien connu de l'Homme du métier et permet, lors de la fermeture de la vanne, d'avoir une mise en contact simultanée de tous les points de la surface conique du joint principal sur la surface conique d'étanchéité du corps, dénommé par la suite « siège ». Cet agencement est donc intéressant pour l'utilisateur : celui-ci ne doit appliquer quasiment aucun couple sur le papillon avant la fermeture. L'utilisateur n'a besoin que d'appliquer un couple après la mise en contact pour forcer l'intimité du contact entre joint et siège.

Par ailleurs, dans ce brevet américain US 9,273,789 B2, le joint est monté sur le papillon (mobile), et le siège est sur le corps de vanne (fixe). Le joint est alors de forme conique « mâle » et le siège est de forme conique « femelle ». Cependant, il est tout à fait possible de monter le joint en partie fixe - il sera alors de forme conique femelle- et d'avoir le siège sur le papillon - il sera alors de forme conique mâle.

Les contraintes de fabrication et de mise au point sont par contre bien réelles pour le fabricant de la vanne. En effet, pour que l'agencement puisse fonctionner de manière optimale, il faut que la surface conique du joint s'ajuste parfaitement avec celle du siège. Ceci implique notamment trois aspects : 1) le joint doit avoir un degré de liberté latéral pour être en bonne position - la cinématique optimale imposée par ce type de construction est en effet perturbée par les différentes tolérances de fabrication de l'assemblage, et il importe donc de laisser au système la possibilité de s'auto-ajuster ; 2) les géométries des parties coniques doivent être les plus précises possible ; 3) les géométries des parties coniques ne doivent pas se déformer dans le temps, comme lors de montées en température, par exemple.

Malgré tout cela, la notion « d'ajustement parfait » demeure peu applicable, voire peu réalise, pour l'Homme du métier. Les deux parties coniques mâle et femelle ne peuvent être topologiquement strictement identiques. Or, si le cône mâle est très légèrement moins ample que le cône femelle, il restera en fin de fermeture un champ d'ouvertures plus ou moins étendu entre les deux surfaces, et la fonction d'étanchéité sera de fait fortement altérée.

La réponse de l'Homme du métier à ce problème va se situer dans le mode de tolérancement des deux surfaces coniques. Il va de fait créer un peu d'interférence, en particulierde pénétration du cône male dans le cône femelle ou inversement, pourgarantir l'absence d'un champ d'ouvertures. Cela fonctionne, mais on perd de fait la mise en contact simultanée de tous les points de la surface conique mâle sur la surface conique femelle. Une étude cinématique montre en effet que, quelques degrés avant la fin de la fermeture, le contact va d'abord s'effectuer dans les zones les plus proches de l'axe de manoeuvre de la vanne ; puis il se répandra progressivement vers les zones les plus éloignées dudit axe de manoeuvre. On aura donc bien un léger couple de manoeuvre dans les derniers degrés de fermeture.

On comprend donc que l'on est amené à finalement travailler avec des joints coniques potentiellement très rigides, donc peu favorables à l'accommodation entre surfaces, ce qui serait bénéfique à l'étanchéité, au profit d'un gain finalement réduit quant à la diminution des couples de manoeuvre.

La rigidité des joints coniques peut être amoindrie en remplaçant un joint conique métallique monobloc par un joint lamellaire, constitué d'un empilage de lamelles graphite et métallique, comme par exemple visible sur la figure 4 du brevet américain US 9,273,789 B2 déjà décrit précédemment. Cependant, le gain en souplesse reste finalement assez faible. Il est également à signaler que ce type de construction peut ne pas être applicable, notamment dans les applications pour lesquelles le graphite n'est pas compatible. L'usure dans le temps du composant graphite est aussi un problème, le graphite étant assez friable et donc fortement susceptible de s'éroder en service.

Si l'on s'écarte du domaine technique des vannes papillon à triple excentration, on peut voir qu'il est d'usage de travailler avec des solutions d'étanchéité métalliques différentes. La demande de brevet français FR 2 615 580 A1 présente par exemple une solution intéressante, pour vannes à papillon à double excentration. Pour rappel, dans cette construction, la surface d'étanchéité est de forme conique ou rayonnée, mais en tout cas sans inclinaison (si l'on se réfère au brevet US 9,273,789 B2, cela veut dire qu'il n'y a plus l'angle d'inclinaison mentionné précédemment). L'étanchéité est effectuée par un principe de joint métallique en C à âme ressort : il s'agit d'une conception particulière de joint métallique en C avec âme ressort, comme par exemple le joint HELICOFLEX^{®}, commercialisé par la société française Technetics Group, dont le principe de base est lui-même explicitement décrit dans la demande de brevet français FR 2 151186 A1. Le joint comprend deux tores : un tore dynamique que le papillon va comprimer à chaque fermeture et un tore statique assurant l'étanchéité entre l'intérieur de la conduite et l'environnement extérieur. Une membrane d'étanchéité fait le lien entre les deux tores. Cette membrane est en fait la continuité des revêtements d'étanchéité des deux tores. Cette solution donne de bonnes performances sur vannes à papillon à double excentration, et ce jusqu'à des pressions à étancher de l'ordre de 70 bar au maximum.

On peut ainsi légitimement se poser la question d'une adaptation de ce concept aux vannes à papillon à triple excentration. On se heurte alors à une difficulté géométrique. Sur une configuration à double excentration, la portée du tore se situe dans un plan perpendiculaire à l'axe de la conduite. Dans ce plan, la forme de la portée est circulaire : on obtient en effet un cercle par l'intersection d'un cône ou d'une autre surface de révolution avec un plan orthogonal à l'axe de ce cône ou de cette autre surface de révolution. La forme générale du joint est donc, de la même manière, circulaire. Sur une vanne papillon à triple excentration, la portée du joint se situe à l'identique sur un plan perpendiculaire à l'axe de la conduite. La portée conique a par contre un axe incliné par rapport à l'axe de la conduite. L'intersection du cône et du plan est donc une ellipse. Le double joint proposé dans la demande de brevet français FR 2 615 580 A1 devrait donc être de forme générale elliptique. Ceci introduit une complexité notable. En termes de fabrication, toutes les tôles constituant le joint se doivent en effet d'être déformées par des outils d'emboutissages elliptiques, ce qui est coûteux et complexe en usinage. Une autre alternative pourrait consister en la fabrication initiale d'un joint circulaire, que l'on viendrait ensuite déformer pour lui donner une forme elliptique. En pratique, cela est impossible car la membrane d'étanchéité donne de fait une très forte rigidité axisymétrique à l'ensemble, empêchant la déformation générale de la structure du joint.

La demande de brevet européen EP 2 228 572 A1 propose une solution d'étanchéité métallique différente. Dans cette demande, un support de joint comprime un joint secondaire monté sur papillon. Ce support de joint comprend un logement destiné à accueillir un joint, comme par exemple un O-Ring métallique, voire même un C-Ring. Toutefois, cette demande EP 2 228 572 A1 n'enseigne pas comment assurer avec un tel joint, dans le même temps, une étanchéité correcte entre le joint et le siège, et entre le joint et son support. La forme en C proposée ne permet pas en effet d'assurer cette double fonction d'étanchéité. Le joint métallique en C se devrait d'être comprimé axialement entre le support de joint et le couvercle, et prendrait alors radialement une forme oblongue dont la régularité sur tout le pourtour sera incertaine (fonction des tolérances locales). La maîtrise de l'interférence joint/siège n'est donc pas enseignée. Or, l'Homme du métier sait qu'il s'agit d'une des clés principales de la fiabilité sur ce type d'applications (contrôle du couple de manoeuvre de la vanne, optimisation de la tenue en friction, optimisation du taux de fuite, etc.). Par ailleurs, dans cette demande EP 2 228 572 A1, le joint d'étanchéité accueilli dans le logement du support de joint est pris entre le support de joint et la bague de serrage. Ce type de construction implique de nombreuses difficultés lors de la manipulation et du montage, notamment pour un positionnement correct du joint d'étanchéité lui permettant d'assurer sa fonction de manière optimale. Les opérations de maintenance, notamment de remplacement du joint d'étanchéité, sont complexifiées par cette construction.

Un système avec étanchéité sur siège par joint torique élastomère a en outre été proposé dans la demande internationale WO 98/04376 A2. Les considérations de maîtrise d'interférence sont alors moins importantes, au vu de la souplesse naturelle d'un élastomère. La déclinaison de ce concept avec une étanchéité métallique n'est par contre pas évidente. Il importe en effet de se poser la question de comment définir la gorge et le joint, pour obtenir une interférence idéale sur toute la surface de contact du siège et également limiter les risques de blocage du papillon, du fait d'une trop grande rigidité de l'assemblage boîtier/joint. Typiquement, remplacer dans cette demande un joint torique élastomère par un joint torique métallique sans autre considération amènerait vraisemblablement à un blocage de la vanne du fait d'un assemblage trop rigide.

Un système d'étanchéité métallique similaire est connu de US 2018/266567 A1 dans le domaine des équipements sous vide, ce qui est conceptuellement éloigné du système d'étanchéité de la présente invention.

En conséquence, il existe un besoin pour proposer une solution d'étanchéité métallique, permettant des performances améliorées en comparaison des solutions classiques d'étanchéité pour vannes à papillon à triple excentration, et s'adaptant aisément au caractère elliptique de la portée. Cette solution devrait permettre d'optimiser au mieux les paramètres d'étanchéité, de durée de vie, et de couple de manoeuvre.

### EXPOSÉ DE L'INVENTION

L'invention a pour but de remédier au moins partiellement aux besoins mentionnés ci-dessus et aux inconvénients relatifs aux réalisations de l'art antérieur.

L'invention a ainsi pour objet, selon l'un de ses aspects, un système d'étanchéité métallique pour une vanne papillon à triple excentration, comportant :
- un joint d'étanchéité métallique dynamique, comprenant préférentiellement une âme métallique enveloppée dans un revêtement externe,
- un boîtier métallique dont la surface extérieure est de forme conique inclinée, comprenant un premier logement dans lequel est monté le joint d'étanchéité métallique dynamique,
- un couvercle métallique, fixé au boîtier métallique pour en permettre la fermeture par affleurement des faces supérieures ou inférieures du couvercle métallique et du boîtier métallique, le boîtier métallique comprenant un deuxième logement pour recevoir le couvercle métallique, le joint d'étanchéité métallique dynamique étant situé entre le couvercle métallique et la surface du boîtier métallique définissant le premier logement.

L'invention a encore pour objet, selon un autre de ses aspects, une vanne papillon à triple excentration, comportant :
- un corps de vanne définissant une conduite, et comprenant une partie conique inclinée formant le siège de vanne,
- un arbre de vanne guidé en rotation de part et d'autre de la conduite, relié à une tige de manoeuvre de la vanne papillon,
- un papillon tournant simultanément avec l'arbre de vanne, logé dans la conduite du corps de vanne,
caractérisée en ce qu'elle comporte en outre un système d'étanchéité métallique monté dans le papillon, ou dans le corps de vanne, en appui par écrasement sur un joint d'étanchéité secondaire assurant l'étanchéité entre le système d'étanchéité métallique et le papillon, ou respectivement le corps de vanne, et dont une partie conique inclinée externe, ou respectivement interne, assure l'étanchéité avec le siège de vanne, ou respectivement le papillon,
et en ce que ledit boîtier est au contact du joint d'étanchéité secondaire.

Le système d'étanchéité métallique peut être indifféremment monté dans le corps de vanne ou dans le papillon. Avantageusement, le système d'étanchéité métallique présente une capacité d'accommodation radiale et ne se déforme pas à cause de l'appui axial sur le joint d'étanchéité secondaire lors du montage sur le papillon ou sur le corps de vanne.

Le système d'étanchéité métallique et la vanne papillon selon l'invention peuvent en outre comporter l'une ou plusieurs des caractéristiques suivantes prises isolément ou suivant toutes combinaisons techniques possibles.

Le joint d'étanchéité métallique dynamique peut être de différents types. En particulier, il peut s'agir d'un joint torique, ou encore appelé « O-ring » selon l'appellation anglo-saxonne, d'un joint en C, ou encore appelé « C-ring » toujours selon l'appellation anglo-saxonne, entre autres. Préférentiellement, le joint d'étanchéité métallique dynamique comprend une âme métallique enveloppée dans un revêtement externe.

L'âme métallique peut être constituée par un ressort, notamment un ressort hélicoïdal à spires jointives refermé sur lui-même et présentant, à l'état de repos, la forme d'un tore.

Le revêtement externe, dans lequel l'âme métallique est insérée, peut présenter, à l'état de repos, la forme d'une surface torique dont le cercle générateur ne se referme pas sur lui-même.

En particulier, le joint d'étanchéité métallique dynamique peut être en C avec une âme ressort, comme par exemple le joint HELICOFLEX^{®}, commercialisé par la société française Technetics Group, dont le principe de base est décrit dans la demande de brevet français FR 2 151186 A1.

De plus, le premier logement du boîtier métallique peut comprendre une surface d'appui latérale contre laquelle est positionné le joint d'étanchéité métallique dynamique.

La surface d'appui latérale peut être de forme quelconque, en particulier de forme non circulaire, et notamment configurée pour l'obtention d'une interférence variable sur le pourtour du système d'étanchéité. La forme peut ainsi être définie à souhait pour obtenir une interférence prédéterminée en chaque point du pourtour du système d'étanchéité.

La surface d'appui latérale peut en particulier être elliptique. Le joint d'étanchéité métallique dynamique peut être de forme circulaire. Il peut de plus être apte à être comprimé radialement pour prendre une forme elliptique.

De plus, le premier logement du boîtier métallique peut comprendre une surface d'appui latérale contre laquelle est positionné le joint d'étanchéité métallique dynamique, la surface d'appui latérale étant de forme elliptique.

Le joint d'étanchéité métallique dynamique peut être de forme générale elliptique, son ellipse intérieure étant sensiblement identique à l'ellipse de la surface d'appui latérale (à un léger jeu ou serrage près). Selon la rigidité du joint et la différence de cote entre grand et petit axes, on peut aussi considérer que le joint est de forme générale circulaire, sa forme elliptique étant prise lors du montage dans le premier logement, notamment par léger étirage selon le grand axe. C'est alors le premier logement lui-même qui permet le maintien de la forme elliptique du joint d'étanchéité dynamique.

Par ailleurs, le joint d'étanchéité métallique dynamique peut être un joint en « U », avec une ouverture orientée vers la face supérieure ou la face inférieure du boîtier, notamment avec une ouverture décalée d'un angle maximal de 30° par rapport à l'axe central du boîtier.

Autrement dit, il est possible de conserver une forme en « U » mais légèrement inclinée. Ceci peut être utile pour éviter par exemple que les extrémités du « U » s'accrochent inopportunément au siège de vanne lors de la fermeture et déroulent ou froissent le revêtement du joint dynamique.

Le joint d'étanchéité métallique dynamique peut être un joint en « U ».

Le revêtement du joint d'étanchéité métallique dynamique peut comprendre un unique métal, par exemple du nickel. En variante, le revêtement peut comprendre une partie rigide, par exemple en inox ou en inconel^{®}, sur laquelle un dépôt souple est ajouté uniquement en surface, par exemple un dépôt d'argent, de polytétrafluoroéthylène (PTFE) et/ou de nickel-PTFE.

Dans certaines applications, on peut s'accommoder d'une performance moins bonne en étanchéité mais, la vanne étant susceptible de faire un grand nombre d'ouvertures/fermetures, on souhaite limiter l'usure de surface. Alors, le revêtement pourra comprendre une partie rigide, par exemple en inox ou en inconel^{®}, durcie en surface, par exemple par le biais d'une cémentation ou d'un procédé de durcissement superficiel tel que celui appelé Kolsterising^{®} par la société Bodycote.

En outre, le joint d'étanchéité métallique dynamique peut comprendre des texturations de surface, de sorte à augmenter sa capacité à créer un contact intime avec le siège de vanne.

Le système d'étanchéité métallique peut être configuré pour être monté dans le papillon, ou dans le corps de vanne, d'une vanne papillon à triple excentration comportant un corps de vanne définissant une conduite, et comprenant une partie conique inclinée formant le siège de vanne, un arbre de vanne guidé en rotation de part et d'autre de la conduite, relié à une tige de manoeuvre de la vanne papillon, et un papillon tournant simultanément avec l'arbre de vanne. Le système d'étanchéité métallique peut être en appui par écrasement sur un joint d'étanchéité secondaire assurant l'étanchéité entre le système d'étanchéité métallique et le papillon, ou respectivement le corps de vanne, et dont une partie conique inclinée externe, ou respectivement interne, assure l'étanchéité avec le siège de vanne, ou respectivement le papillon et ledit boîtier peut être au contact du joint d'étanchéité secondaire.

Le système d'étanchéité métallique peut être configuré pour être monté dans un embrèvement du papillon, ou dans un embrèvement du corps de vanne.

Le papillon peut comporter une gorge logeant le joint d'étanchéité secondaire lorsque le système d'étanchéité métallique est monté dans le papillon, ou le corps de vanne peut comporter une gorge logeant le joint d'étanchéité secondaire lorsque le système d'étanchéité métallique est monté dans le corps de vanne.

Cette gorge peut être intégrée au boîtier. Cette alternative présente les avantages suivants : le fabricant de vanne peut éviter l'opération d'usinage d'une gorge sur le papillon ou respectivement sur le corps de vanne; le fabricant du joint peut maîtriser au mieux les tolérances d'usinage de la gorge du joint d'étanchéité secondaire, qui peut être un point critique pour le fonctionnement du joint.

Le joint d'étanchéité secondaire peut être un joint d'étanchéité spiralé ou un joint d'étanchéité matricé, étant notamment réalisé en graphite.

Le système d'étanchéité métallique peut être configuré pour être monté dans le papillon, et le système d'étanchéité métallique et le joint d'étanchéité secondaire peuvent être configurés pour être comprimés axialement par une bride, fixée au papillon par un réseau d'écrous.

### BRÈVE DESCRIPTION DES DESSINS

L'invention pourra être mieux comprise à la lecture de la description détaillée qui va suivre, d'exemples de mise en oeuvre non limitatifs de celle-ci, ainsi qu'à l'examen des figures, schématiques et partielles, du dessin annexé, sur lequel :
[Fig. 1] illustre, selon une vue en perspective et en coupe selon un plan perpendiculaire à l'axe de la tige de manoeuvre du papillon d'une vanne papillon à triple excentration ouverte, un exemple de système d'étanchéité métallique conforme à l'invention et de vanne papillon à triple excentration,
[Fig. 2] et [Fig. 3] illustrent, selon des vues de détails en coupe dans le plan de la tige de manoeuvre de la vanne, le système d'étanchéité métallique de [Fig. 1] avec la vanne papillon fermée,
[Fig. 4] et [Fig. 5] illustrent, respectivement selon une vue en perspective et selon une vue de face, un exemple de boîtier d'un système d'étanchéité conforme à l'invention,
[Fig. 6] illustre, selon une vue en coupe et en perspective, un exemple de système d'étanchéité conforme à l'invention comprenant le boîtier métallique, le couvercle métallique et le joint d'étanchéité métallique dynamique, et
[Fig. 7] illustre, selon une vue de détails en coupe, une variante de réalisation du système d'étanchéité métallique conforme à l'invention.

Dans l'ensemble de ces figures, des références identiques peuvent désigner des éléments identiques ou analogues.

De plus, les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

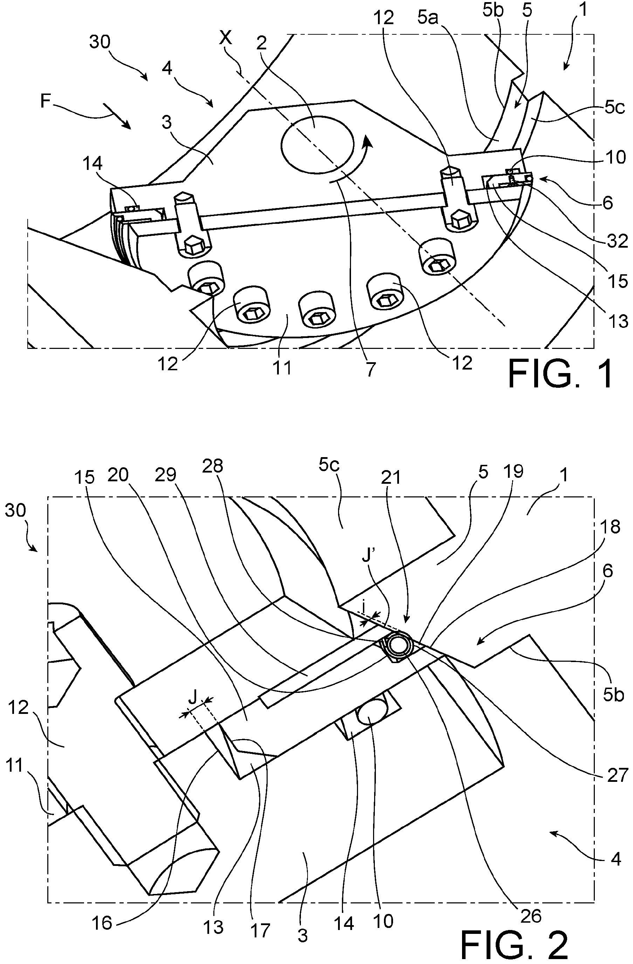

Il va maintenant être décrit, en référence aux figures 1 à 7, des exemples de réalisation de l'invention.

Tout d'abord, un premier exemple de vanne papillon à triple excentration 30 comprenant un système d'étanchéité métallique 6 conforme à l'invention va être décrit en référence aux figures 1 à 6.

La figure 1 illustre ainsi une vue en coupe de la vanne papillon 30, en position ouverte, et du système d'étanchéité métallique 6 dans un plan perpendiculaire à l'axe de la tige de manoeuvre du papillon 3.

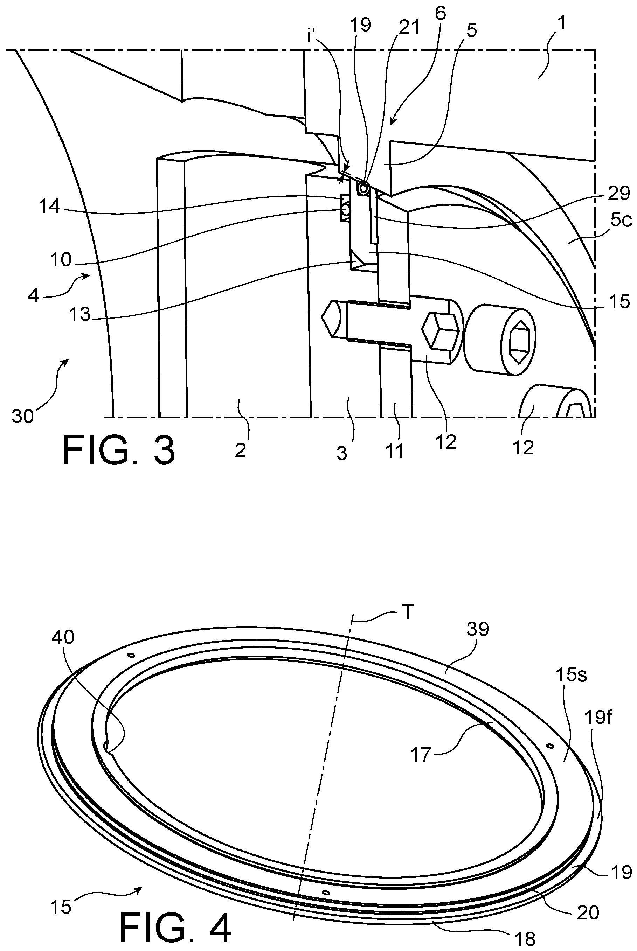

Les figures 2 et 3 illustrent quant à elles des vues de détails en coupe dans le plan de la tige de manoeuvre de la vanne papillon 30 en position fermée.

La vanne papillon à triple excentration 30 comporte ainsi un corps de vanne 1 creux, dont le creux définit une conduite 4. Le corps de vanne 1 comporte par ailleurs, au niveau de sa périphérie interne délimitant son creux, une partie annulaire conique et inclinée interne qui forme le siège de vanne 5, visible sur la figure 1 par exemple. Autrement dit, le siège de vanne 5 comporte une surface interne 5a de forme conique inclinée.

Cette surface interne 5a s'étend entre une face latérale amont 5b et une face latérale aval 5c du siège de vanne 5. Il est à noter que les termes « amont » et « aval » doivent s'entendre par rapport au sens de circulation normal du fluide, de l'amont vers l'aval, tel que représenté par la flèche F sur la figure 1.

Les surfaces latérales amont 5b et aval 5a sont comprises dans des plans perpendiculaires à l'axe X de la conduite 4. Par ailleurs, si l'on coupe le siège de vanne 5 par un plan perpendiculaire à l'axe X de la conduite 4 et compris entre les deux plans dans lesquels les surfaces latérales 5b et 5a sont inscrites, l'arête interne du siège de vanne 5 serait alors de forme elliptique.

La vanne papillon 30 comporte de plus un passage d'axe 2, destiné à accueillir l'arbre de vanne (non représenté), guidé en rotation de part et d'autre de la conduite 4, et relié à une tige de manoeuvre de la vanne papillon 30. La vanne papillon 30 comporte également un papillon 3, logé dans la conduite 4 et traversé par le passage d'axe 2, et destiné à tourner simultanément avec l'arbre de vanne 2 dans le sens indiqué par la flèche 7 sur la figure 1.

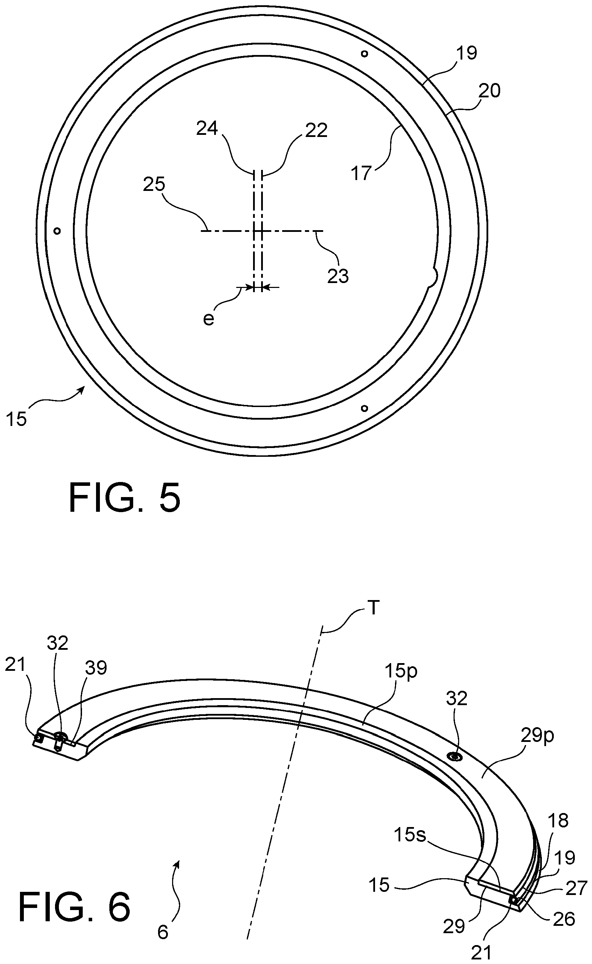

Par ailleurs, le papillon 3 comporte, sur sa périphérie, un embrèvement 13, pour l'intégration d'un système d'étanchéité 6 conforme à l'invention tel que visible sur la figure 6 par exemple, au fond duquel est usinée une gorge 14. En variante, si le système d'étanchéité métallique 6 était monté sur le corps de vanne 1, l'embrèvement serait situé sur le corps de vanne 1. De même, la gorge pourrait être formée dans le corps de vanne 1 si le système d'étanchéité métallique 6 était monté dans le corps de vanne 1.

Un joint d'étanchéité secondaire 10 est positionné dans la gorge 14, puis le système d'étanchéité métallique 6 vient recouvrir le joint d'étanchéité secondaire 10. Le joint d'étanchéité secondaire 10 est par exemple un joint spiralé. Il est destiné à couper le chemin de fuite entre le système d'étanchéité métallique 6 et le papillon 3.

L'ensemble formé par le système d'étanchéité métallique 6 et le joint d'étanchéité secondaire 10 est comprimé axialement par une bride 11, elle-même serrée par un réseau d'écrous 12.

La figure 2 montre une vue de détails, prise à 90° de l'axe de la vanne, du système d'étanchéité 6, sur le papillon 3 en position fermée.

Le système d'étanchéité 6 comprend ainsi un boîtier 15, adapté pour être monté dans l'embrèvement 13 aménagé dans le papillon 3. Comme représenté sur la figure 2, un jeu J est présent entre le diamètre intérieur 17 du boîtier 15 et le diamètre extérieur 16 du papillon 3, dans l'embrèvement 13, ce qui permet à l'ensemble de s'auto-positionner lors de la première fermeture.

La surface extérieure 18 du boîtier 15 est de forme conique inclinée, avec des dimensions telles que, en fin de fermeture, elle est en contact uniforme avec le siège de vanne 5.

Par ailleurs, un premier logement 19 est aménagé dans le boîtier 15. Ce premier logement 19 comprend une surface d'appui latérale 20, préférentiellement parallèle à l'axe central T du boîtier 15, représenté sur la figure 4. Il faut noter que l'on dénomme « face supérieure » et « face inférieure » du boîtier 15 les deux surfaces perpendiculaires à l'axe central T du boîtier 15. Par convention, on désigne par « face supérieure » la surface la plus proche du sommet du cône formant la surface extérieure. En comparaison avec un joint d'étanchéité massif de l'art antérieur, le premier logement 19 serait alors formé par enlèvement de matière sur la surface supérieure ou sur la surface inférieure. Le premier logement 19 est ici formé sur la face supérieure du boîtier 15 mais il pourrait être formé sur la face inférieure sans sortir du cadre de l'invention.

Le premier logement 19 est ainsi ouvert vers l'extérieur. Si l'on coupe le boîtier 15 selon un plan comprenant l'axe central T, on observe une géométrie similaire à celle d'une marche d'escalier, coupant le cône extérieur. Le fond 19f du premier logement 19 est préférentiellement plat tandis que la surface d'appui latérale 20 est préférentiellement parallèle à l'axe central T.

En outre, il faut noter que, comme visible sur la figure 4, le boîtier 15 comporte un système d'indexage 40 permettant de le positionner correctement angulairement sur le papillon 3, par exemple une encoche pour goupille sur son diamètre intérieur. En réalité, toute la partie intérieure du boîtier 15 permet de le positionner sur le papillon 3.

Ainsi, le boîtier 15 est indexé en position angulaire dans l'embrèvement 13 par une goupille axiale montée dans le papillon 3 et passant par l'encoche 40 du boîtier 15, cet agencement n'étant pas totalement représenté.

La figure 5 représente une vue de dessus du boîtier 15. On observe que la surface d'appui latérale 20 est de forme elliptique avec un grand axe 23 et un petit axe 22. Le grand axe 23 est confondu avec l'axe médian horizontal du diamètre intérieur 17 du boîtier 15. Le petit axe 22 est parallèle à l'axe médian vertical 24 du diamètre intérieur 17 du boîtier 15 avec un décalage d'une valeur e.

Par ailleurs, un joint d'étanchéité métallique dynamique 21 est monté dans le premier logement 19. Il comprend un ressort à spires 26 et un revêtement 27. Il peut par exemple s'agir d'un joint d'étanchéité simple tore en « U ». Il faut noter que l'on parle d'ouverture en « C » lorsque l'ouverture est orientée vers le diamètre intérieur ou extérieur du boîtier. En vue en coupe, l'ouverture est ici orientée vers la face supérieure ou la face inférieure de sorte que l'on parle alors d'ouverture en « U ». Autrement dit, le positionnement est à 90° d'une ouverture en « C ». Ce joint dynamique 21 présente des parties lisses sur ses diamètres intérieur et extérieur, et permet donc d'étancher radialement au contact de ses diamètres intérieur et extérieur.

Par exemple, il peut s'agir d'un joint d'étanchéité de marque HELICOFLEX^{®}, commercialisé par la société française Technetics Group, dont le principe de base est décrit dans la demande de brevet français FR 2 151186 A1. On peut noter que, visuellement, l'écart de cotes entre le petit axe 22 et le grand axe 23 est assez faible. Le joint d'étanchéité 21 peut être fabriqué sous forme circulaire, puis il pourra être étiré manuellement lors du montage dans le premier logement 19 de sorte à prendre sa forme elliptique, étant maintenu par la surface d'appui latérale 20.

Une fois positionné dans son premier logement 19, le joint dynamique 21 est, sur sa périphérie intérieure, en contact avec la surface d'appui latérale 20 ou surface verticale du premier logement 19. Dans une coupe par un plan comprenant l'axe central T, la section du joint dynamique 21 coupe, sur sa périphérie extérieure, la surface conique fictive prolongeant la surface conique réelle qui fait la forme extérieure du boîtier 15. La pénétration maximale de l'arc de cercle du tore du joint dynamique 21 dans le cône, mesurée perpendiculairement à la surface du cône, est dénommée « interférence ». Lors de la fermeture de la vanne 30, le système d'étanchéité 6 va se mettre en position contre le siège de vanne 5 de forme conique inclinée, réalisé de sorte que sa surface se confondra, en fin de fermeture, avec la surface conique inclinée formant la forme extérieure du boîtier 15. Le boîtier 15 pourra servir de butée, s'il n'y en a pas ailleurs sur la vanne 30, et l'interférence correspondra à la compression effective du joint dynamique 21 sur le siège de vanne 5. Comme il a été précisé dans l'exposé de l'art antérieur, les surfaces coniques du boîtier 15 et du siège de vanne 5 ne peuvent être parfaitement en adéquation. Toutefois, ceci n'est pas gênant dans la mesure où c'est l'interférence du joint dynamique 21 qui permet l'étanchéité et non la parfaite adéquation des deux surfaces coniques.

Le revêtement 27 présente une forme en « U ». Dans l'exemple décrit, l'ouverture 28 du « U » est très légèrement décalée angulairement de sa position normale, à savoir parallèle à l'axe central T du boîtier 15, vers l'intérieur ; ainsi, on est certain que les extrémités du revêtement 27 ne peuvent accrocher le siège de vanne 5 pendant les manoeuvres de la vanne 30, ce qui endommagerait ce revêtement 27. Quelle que soit la position exacte de l'ouverture 28, il importe que celle-ci ne coupe en aucun cas les diamètres extérieur et intérieur du joint puisque l'étanchéité va se faire à leur niveau.

De plus, un couvercle 29 ferme le système d'étanchéité métallique 6 par affleurement, ou sensible continuité de surface, entre la face supérieure 29p du couvercle 29 et la face supérieure 15p du boîtier métallique 15 de manière à permettre le positionnement du système d'étanchéité 6 contre la bride 11. Ce couvercle 29 est avantageusement positionné dans un deuxième logement 39 du boîtier 15, formé ici par une découpe 15s de la face supérieure 15p du boîtier 15 (mais il pourrait s'agir de la face inférieure). De plus, le couvercle 29 est maintenu par trois vis axiales 32, visibles sur les figures 1 et 6. Ces vis 32 doivent permettre de maintenir le couvercle 29 pendant le transport et le montage du système d'étanchéité 6. En effet, le maintien de l'ensemble sur la vanne 30 est assuré au final par la bride 11 et les écrous 12. Autrement dit, le système d'étanchéité 6 forme un ensemble comprenant le joint d'étanchéité 21 entre le boîtier 15 et le couvercle 29 qui est homogène et indépendant de la bride 11. La présence du couvercle 29 dans un deuxième logement 39 du boîtier 15, prévu de sorte à ce que la face supérieure du système d'étanchéité 6 soit formée par le couvercle 29 et une partie du boîtier 15, permet avantageusement de faciliter la manipulation du système d'étanchéité 6 et de rendre le montage plus aisé. En outre, toute opération de maintenance, notamment de remplacement du joint d'étanchéité 21, est facilité par l'usage de ce couvercle 29.

La forme extérieure du couvercle 29 est conique inclinée. Le couvercle 29 est indexé angulairement avec le boîtier 15. La zone conique inclinée formant l'extérieur du couvercle 29 remplace en fait, après montage, la zone conique inclinée équivalente d'un joint métallique brut classique qui a été retirée à la même localisation lors de la création du premier logement 19 du joint dynamique 21.

Un jeu J' est en outre formé entre l'extérieur du couvercle 29 et le siège de vanne 5. Aussi, le couvercle 29 ne vient jamais toucher le siège de vanne 5. Avantageusement, au vu de sa faible épaisseur, cela permet d'éviter le risque de tordre le couvercle 29 à la fermeture de la vanne 30. A la fermeture, la compression radiale du joint dynamique 21 va se faire par le biais de l'interférence i entre la périphérie du joint 21 et du siège de vanne 5.

Sur la figure 3, qui présente une vue en coupe similaire à celle de la figure 2, mais dans un plan comprenant la ligne d'axe de la vanne, non représenté, le joint 21 présente là-aussi une interférence i'. Dans une réalisation préférée, l'Homme du métier pourra déterminer les longueurs du grand axe 23 et du petit axe 22, ainsi que le décalage e, de manière à créer une interférence uniforme du joint dynamique 21 avec le siège de vanne 5 sur toute la périphérie du système d'étanchéité 6 de sorte à obtenir i = i'. Toutefois, il est possible par exemple de diminuer la longueur du petit axe 22, de sorte à obtenir i < i'. Ceci peut avoir un intérêt dans le cadre de la réduction des couples de manoeuvre et des efforts de torsion sur le revêtement 27 au niveau de l'axe, et donc une limitation par conséquence de l'usure du revêtement 27. De manière générale, l'Homme du métier peut modifier tout ou partie de la forme de la surface d'appui 20 pour gérer l'interférence localement.

Lors du montage, le système d'étanchéité métallique 6 ainsi défini est positionné sur le papillon 3 de la même façon qu'un joint massif métallique usuel qu'il remplace. Il vient en contact du joint secondaire 10, bloquant la fuite autour de lui-même, et l'ensemble est comprimé par la bride 11.

Il est à noter que préférentiellement, la zone conique inclinée du couvercle 29 est positionnée en léger retrait de la zone conique inclinée équivalente d'un joint d'étanchéité brut classique. Ceci permet d'avoir un maintien optimal du joint dynamique 21 dans le premier logement 19, sans pour autant obtenir un contact entre siège de vanne 5 et couvercle 29 lors de la fermeture. Un tel contact n'aurait aucune utilité du point de vue de l'étanchéité, mais créerait des contraintes mécaniques sur le couvercle 29, susceptibles de l'endommager.

Par ailleurs, l'ellipse formée par la surface d'appui latérale 20 du premier logement 19 est définie de telle sorte que l'interférence effective du joint dynamique 21 soit identique sur toute la périphérie du système d'étanchéité 6. Concrètement, pour ce faire, cela implique une optimisation des dimensions des grand et petit axes. Le centre de l'ellipse est également ajusté en position sur la droite colinéaire à son propre grand axe.

En outre, il est possible d'avoir une interférence variable sur le pourtour du système d'étanchéité 6. Pour ce faire, il faut reconsidérer cette surface d'appui latérale 20 du premier logement 19 de forme elliptique, et également la définir comme étant de forme générale quelconque. On peut alors la définir à souhait pour obtenir sur chaque point cardinal du système d'étanchéité 6 une interférence à façon du joint dynamique 21. Cela présente plusieurs avantages : il peut être par exemple intéressant, afin de limiter le couple de fermeture de la vanne 30, de limiter l'interférence dans les zones proches de l'axe. Ces zones sont également celles dans lesquelles le matériau du joint dynamique 21 est contraint en torsion, ce qui est à son détriment au regard de sa durée de vie potentielle. Comme cela était expliqué dans l'état de l'art antérieur, l'interférence va, lors de la fermeture, se manifester tout d'abord dans ces zones proches de l'axe de manoeuvre et donc générer un couple résistif et des torsions à la surface du joint dynamique 21. Or ces zones sont aussi celles dans lesquelles l'interférence joint dynamique 21/siège de vanne 5 est la plus facilement maîtrisable, en termes de précision des cotes et de positionnement respectif entre système d'étanchéité 6 et siège de vanne 5. Il est donc imaginable de la diminuer localement dans ces zones. Dans ce cas spécifique, on peut conserver une surface d'appui 20 du joint dynamique 21 de forme elliptique, mais dont le petit axe est diminué pour réduire l'interférence dans les zones proches de l'axe. On peut aussi construire la surface d'appui 20 de la manière suivante : on prend comme base une surface d'appui de forme elliptique donnant une interférence de compression uniforme. On coupe alors cette ellipse par des droites parallèles au grand axe. En faisant ceci, on réduit l'interférence au niveau des passages d'axe.

Un perfectionnement peut consister en la création d'un ressort complet 26, en soudant plusieurs longueurs libres de ressorts. Pourtoutes les longueurs libres, le diamètre de spire est le même. Par contre le diamètre de fil de ressort et/ou la matière du fil peuvent être différents. La raideur de chaque longueur libre sera donc différente, ce qui permet d'avoir des comportements mécaniques locaux différents. Il importera bien sûr de repérer les différentes zones de raideur pour positionner chacune à sa localisation respective lors du montage de l'ensemble.

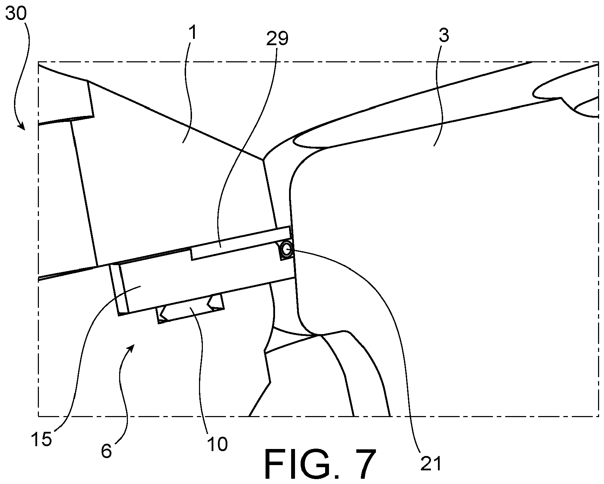

En outre, la figure 7 présente une version de l'invention dans une configuration « inversée », c'est-à-dire que le système d'étanchéité 6 est monté dans le corps de vanne 1, venant au contact avec un siège de vanne formé par la surface extérieure du papillon 3. Il faut noter que le joint d'étanchéité secondaire 10 est ici un joint spiralé et non un joint torique. En effet, l'invention n'est pas restreinte à un type particulier de joint secondaire.

Bien entendu, l'invention n'est pas limitée aux exemples de réalisation qui viennent d'être décrits. Diverses modifications peuvent y être apportées par l'homme du métier.

## Revendications

1. Système d'étanchéité métallique (6) pour une vanne papillon à triple excentration (30), comportant :
- un joint d'étanchéité métallique dynamique (21), comprenant une âme métallique (26) enveloppée dans un revêtement externe (27),
- un boîtier métallique (15) dont la surface extérieure (18) est de forme conique inclinée, comprenant : un premier logement (19) dans lequel est monté le joint d'étanchéité métallique dynamique (21), et un deuxième logement (39) formé par une découpe de la face supérieure ou de la face inférieure du boîtier métallique (15),
- un couvercle métallique (29), fixé dans le deuxième logement (39) du boîtier métallique (15) pour en permettre la fermeture par affleurement des faces supérieures ou inférieures du couvercle métallique (29) et du boîtier métallique (15), le joint d'étanchéité métallique dynamique (21) étant situé entre le couvercle métallique (29) et la surface du boîtier métallique (15) définissant le premier logement (19).

2. Système d'étanchéité selon la revendication 1, **caractérisé en ce que** l'âme métallique (26) est constituée par un ressort, notamment un ressort hélicoïdal à spires jointives refermé sur lui-même et présentant, à l'état de repos, la forme d'un tore.

3. Système d'étanchéité selon la revendication 2, **caractérisé en ce que** le revêtement externe (27), dans lequel l'âme métallique (26) est insérée, présente, à l'état de repos, la forme d'une surface torique dont le cercle générateur ne se referme pas sur lui-même.

4. Système d'étanchéité selon l'une quelconque des revendications précédentes, **caractérisé en ce que** le premier logement (19) du boîtier métallique (15) comprend une surface d'appui latérale (20) contre laquelle est positionné le joint d'étanchéité métallique dynamique (21), la surface d'appui latérale (20) étant de forme non circulaire, notamment configurée pour l'obtention d'une interférence variable sur le pourtour du système d'étanchéité (6).

5. Système d'étanchéité selon la revendication 4, **caractérisé en ce que** la surface d'appui latérale (20) est de forme elliptique.

6. Système d'étanchéité selon la revendication 5, **caractérisé en ce que** le joint d'étanchéité métallique dynamique (21) est de forme circulaire et apte à être comprimé radialement pour prendre une forme elliptique.

7. Système d'étanchéité selon l'une quelconque des revendications précédentes, **caractérisé en ce que** le joint d'étanchéité métallique dynamique (21) est un joint en « U », avec une ouverture orientée vers la face supérieure ou la face inférieure du boîtier (15), notamment avec une ouverture décalée d'un angle maximal de 30° par rapport à l'axe central (T) du boîtier (15).

8. Système d'étanchéité selon l'une quelconque des revendications précédentes, **caractérisé en ce qu'**il est configuré pour être monté dans le papillon (3), ou dans le corps de vanne (1), d'une vanne papillon à triple excentration (30) comportant un corps de vanne (1) définissant une conduite (4), et comprenant une partie conique inclinée formant le siège de vanne (5), un arbre de vanne guidé en rotation de part et d'autre de la conduite (4), relié à une tige de manoeuvre de la vanne papillon (30), et un papillon (3) tournant simultanément avec l'arbre de vanne (2), le système d'étanchéité métallique (6) étant en appui par écrasement sur un joint d'étanchéité secondaire (10) assurant l'étanchéité entre le système d'étanchéité métallique (6) et le papillon (3), ou respectivement le corps de vanne (1), et dont une partie conique inclinée externe, ou respectivement interne, assure l'étanchéité avec le siège de vanne (5), ou respectivement le papillon (3),
et ledit boîtier (15) étant au contact du joint d'étanchéité secondaire (10).

9. Système d'étanchéité selon la revendication 8, **caractérisé en ce que** le système d'étanchéité métallique (6) est configuré pour être monté dans un embrèvement (13) du papillon (3), ou dans un embrèvement du corps de vanne (1).

10. Système d'étanchéité la revendication 8 ou 9, **caractérisée en ce que** le système d'étanchéité métallique (6) est configuré pour être monté dans le papillon (3), et **en ce que** le système d'étanchéité métallique (6) et le joint d'étanchéité secondaire (10) sont configurés pour être comprimés axialement par une bride (11), fixée au papillon (3) par un réseau d'écrous (12)

## Patentansprüche

1. Metalldichtungssystem (6) für dreifach exzentrisches Drosselventil (30), Folgendes beinhaltend:
- eine dynamische Metalldichtung (21), die einen Metallkern (26) umfasst, der in eine Außenbeschichtung (27) eingehüllt ist,
- ein Metallgehäuse (15), dessen Außenfläche (18) in einer geneigten konischen Form ist, umfassend: eine erste Aufnahme (19), in der die dynamische Metalldichtung (21) montiert ist, und eine zweite Aufnahme (39), die durch einen Zuschnitt der Oberseite oder der Unterseite des Metallgehäuses (15) gebildet wird,
- einen Metalldeckel (29), der in der zweiten Aufnahme (39) des Metallgehäuses (15) befestigt ist, um dessen Schließen durch bündiges Abgleichen der Ober- oder Unterseiten des Metalldeckels (29) und des Metallgehäuses (15) zu ermöglichen, wobei sich die dynamische Metalldichtung (21) zwischen dem Metalldeckel (29) und der Oberfläche des Metallgehäuses (15) befindet, wodurch die erste Aufnahme (19) definiert wird.

2. Dichtungssystem nach Anspruch 1, **dadurch gekennzeichnet, dass** der Metallkern (26) durch eine Feder, insbesondere eine in sich abgeschlossene Spiralfeder mit berührenden Windungen, die im Ruhezustand die Form eines Torus aufweist, gebildet wird.

3. Dichtungssystem nach Anspruch 2, **dadurch gekennzeichnet, dass** die Außenbeschichtung (27), in welche der Metallkern (26) eingeführt ist, im Ruhezustand die Form einer torischen Oberfläche aufweist, deren Erzeugungskreis sich nicht in sich selbst verschließt.

4. Dichtungssystem nach einem der vorstehenden Ansprüche, **dadurch gekennzeichnet, dass** die erste Aufnahme (19) des Metallgehäuses (15) eine seitliche Anlegefläche (20) umfasst, an der die dynamische Metalldichtung (21) positioniert ist, wobei die seitliche Anlegefläche (20) in einer nicht kreisrunden Form, insbesondere für den Erhalt einer variablen Überschneidung am Umfang des Dichtungssystems (6) konfiguriert ist.

5. Dichtungssystem nach Anspruch 4, **dadurch gekennzeichnet, dass** die seitliche Anlegefläche (20) in einer elliptischen Form ist.

6. Dichtungssystem nach Anspruch 5, **dadurch gekennzeichnet, dass** die dynamische Metalldichtung (21) in einer Kreisform und imstande ist, radial zusammengedrückt zu werden, um eine elliptische Form anzunehmen.

7. Dichtungssystem nach einem der vorstehenden Ansprüche, **dadurch gekennzeichnet, dass** die dynamische Metalldichtung (21) eine "U"-Dichtung mit einer Öffnung, die zur Oberseite oder zur Unterseite des Gehäuses (15) ausgerichtet ist, insbesondere mit einer um einen maximalen Winkel von 30° in Bezug auf die Mittelachse (T) des Gehäuses (15) versetzten Öffnung ist.

8. Dichtungssystem nach einem der vorstehenden Ansprüche, **dadurch gekennzeichnet, dass** es konfiguriert ist, um in der Drossel (3) oder in dem Ventilkörper (1) eines dreifach exzentrischen Drosselventils (30) montiert zu werden, das einen Ventilkörper (1) beinhaltet, der eine Leitung (4) definiert, und einen geneigten konischen Teil, der den Ventilsitz (5) bildet, eine drehgeführte Ventilwelle beiderseits der Leitung (4), die mit einer Klappenwelle des Drosselventils (30) verbunden ist, und eine sich gleichzeitig mit der Ventilwelle (2) drehende Drossel (3) umfassend, wobei das Metalldichtungssystem (6) durch Quetschen an einer Sekundärdichtung (10) anliegt, wodurch für die Dichtheit zwischen dem Metalldichtungssystem (6) und der Drossel (3) oder beziehungsweise dem Ventilkörper (1) gesorgt wird, und wovon ein äußerer oder beziehungsweise innerer geneigter konischer Teil für die Dichtheit zwischen dem Ventilsitz (5) oder beziehungsweise der Drossel (3) sorgt,
und das Gehäuse (15) in Kontakt mit der Sekundärdichtung (10) ist.

9. Dichtungssystem nach Anspruch 8, **dadurch gekennzeichnet, dass** das Metalldichtungssystem (6) konfiguriert ist, um in einer Senkung (13) der Drossel (3), oder um in einer Senkung des Ventilkörpers (1) montiert zu werden.

10. Dichtungssystem Anspruch 8 oder 9, **dadurch gekennzeichnet, dass** das Metalldichtungssystem (6) konfiguriert ist, um in der Drossel (3) montiert zu werden, und dadurch, dass das Metalldichtungssystem (6) und die Sekundärdichtung (10) konfiguriert sind, um axial durch einen Flansch (11), der durch einen Satz an Muttern (12) an der Drossel (3) befestigt ist, zusammengedrückt zu werden.

## Claims

1. Metal sealing system (6) for a triple eccentricity butterfly valve (30) comprising:
- a dynamic metal seal (21), comprising a metal core (26) surrounded by an external coating (27),
- a metal case (15) with an inclined conical external surface (18), comprising: a first housing (19) inside which the dynamic metal seal (21) is mounted, and a second housing (39) formed by a cut-out (15) in the upper face or in the lower face of the metal case,
- a metal cover (29), attached to the second housing (39) of the metal case (15) to allow it to close by flush fitting of the upper or lower faces of the metal cover (29) and the metal case (15), the dynamic metal seal (21) being located between the metal cover (29) and the surface of the metal case (15) defining the first housing (19).

2. Sealing system according to claim 1, **characterized in that** the metal core (26) is composed of a spring, in particular a coil spring with contiguous turns that is closed on itself and that has the shape of a torus when in the rest state.

3. Sealing system according to claim 2, **characterized in that** the external coating (27) inside which the metal core (26) is inserted, has the shape of a toroidal surface for which the generating circle does not close on itself, when in the rest state.

4. Sealing system according to any one of the preceding claims, **characterized in that** the first housing (19) of the metal case (15) comprises a lateral bearing surface (20) with which the dynamic metal seal (21) is positioned in contact, the lateral bearing surface (20) having a noncircular shape, configured in particular to obtain a variable interference around the periphery of the sealing system (6).

5. Sealing system according to claim 4, **characterized in that** the lateral bearing surface (20) is elliptical in shape.

6. Sealing system according to claim 5, **characterized in that** the dynamic metal seal (21) is circular in shape and can be radially compressed to take on an elliptical shape.

7. Sealing system according to any one of the preceding claims, **characterized in that** the dynamic metal seal (21) is a "U" shaped seal, with an opening facing the upper or lower face of the case (15), especially with an opening offset by a maximum angle of 30° from the center line (T) of the case (15).

8. Sealing system according to any one of the preceding claims, **characterized in that** it is configured to be fitted in the disk (3) or in the valve body (1), of a triple eccentricity butterfly valve (30) comprising a valve body (1) defining a conduit (4), and comprising an inclined conical part forming the valve seat (5), a valve stem guided in rotation on each side of the conduit (4), connected to a control rod of the butterfly valve (30), and a disk (3) rotating simultaneously with the valve stem (2), the metal sealing system (6) bearing on a secondary seal (10), crushing it to make the seal between the metal sealing system (6) and the disk (3) or the valve body (1) respectively, and of which an external or internal inclined conical section respectively provides the seal with the valve seat (5) or the disk respectively, and said case (15) being in contact with the secondary seal (10).

9. Sealing system according to claim 8, **characterized in that** the metal sealing system (6) is configured to be installed in a recess (13) in the disk (3) or in a recess in the valve body (1).

10. Sealing system claim 8 or 9, **characterized in that** the metal sealing system (6) is configured to be fitted in the disk (3), and **in that** the metal sealing system (6) and the secondary seal (10) are configured to be compressed axially by a flange (11), attached to the disk (3) by a network of nuts (12).
